Europäisches Patentamt

European Patent Office

Office européen des brevets

(19)

(11) Numéro de publication: **0 224 403**
**B1**

(12) **FASCICULE DE BREVET EUROPEEN**

(45) Date de publication du fascicule du brevet:
04.07.90

(21) Numéro de dépôt: 86402366.8

(22) Date de dépôt: 22.10.86

(51) Int. Cl.⁵: **G11B 5/29**
// G11B5/17, G03G19/00

(54) Procédé pour fabriquer un transducteur magnétique comportant plusieurs têtes.

(30) Priorité: 23.10.85 FR 8515721

(43) Date de publication de la demande:
03.06.87 Bulletin 87/23

(45) Mention de la délivrance du brevet:
04.07.90 Bulletin 90/27

(84) Etats contractants désignés:
AT BE CH DE FR GB IT LI NL SE

(56) Documents cités:
WO-A-85/02479
US-A- 3 613 228
US-A- 3 641 586
US-A- 3 657 806
US-A- 3 678 576
US-A- 3 881 244
US-A- 4 412 379

PATENTS ABSTRACTS OF JAPAN,
vol. 5, no. 146 (P-80)[818], 16 septembre 1981; &
JP-A-56 80 815 (FUJITSU K.K.) 02-07-1981
PATENTS ABSTRACTS OF JAPAN,
vol. 9, no. 116 (P-357)[1839], 21 mai 1985; &
JP-A-60 1614 (SONY K.K.) 07-01-1985
PATENTS ABSTRACTS OF JAPAN,
vol. 1, no. 123, 17 octobre 1977, page 5072 E 77; &

(73) Titulaire: BULL S.A., 121 avenue de Malakoff P.B. 193.16,
F-75764 Paris Cédex 16(FR)

(72) Inventeur: Besinge, Serge, Rue de Bellevue, La Chapelle
Sous Chaux F-90300 Valdoie(FR)

(74) Mandataire: Davroux, Yves et al, BULL S.A. Industrial
Property Department P.C.:
HQ 8M006 B.P. 193.16 121 avenue de Malakoff,
F-75764 Paris Cédex 16(FR)

(56) Documents cités: (suite)
JP-A-52 54 407 (MITSUBISHI DENKI K.K.) 05-02-1977
IBM TECHNICAL DISCLOSURE BULLETIN,
vol. 25, no. 12, mai 1983, pages 6428,6429, New York, US;
R.A. SCRANTON et al.: "MLC technology for print head
transducers"

## Description

La présente invention se rapporte à un procédé pour fabriquer un transducteur magnétique comportant plusieurs têtes. Un tel transducteur trouve tout particulièrement, quoique non exclusivement, son application dans les machines imprimantes magnétiques sans impact.

Les machines imprimantes de ce type, de même que les appareils qui, tels que les mémoires à tambour magnétique ou les unités de disques magnétiques, sont utilisés pour l'enregistrement d'informations, comportent un support d'enregistrement magnétique qui se présente sous des formes diverses, par exemple sous la forme d'un tambour, d'une courroie sans fin ou d'un disque, ce support étant revêtu d'une couche de matière magnétique. L'enregistrement des informations sur ce support est réalisé au moyen d'un organe d'enregistrement appelé transducteur, qui comporte une ou plusieurs têtes d'enregistrement magnétique à proximité desquelles se déplace ce support d'enregistrement. Chacune de ces têtes engendre, chaque fois qu'elle est excitée par un courant électrique d'intensité convenable, un champ magnétique qui a pour effet de créer, sur la surface du support d'enregistrement qui défile devant ces têtes, des domaines magnétisés de petites dimensions, ces domaines, pratiquement ponctuels, étant généralement désignés sous le nom de points magnétisés. La portion de surface du support qui passe ainsi devant chaque tête est désignée habituellement sous le nom de piste d'enregistrement d'informations, le support d'enregistrement comportant, en général, plusieurs pistes qui peuvent être soumises à l'enregistrement, soit individuellement au cours d'opérations d'enregistrement successives, soit simultanément au cours d'une seule opération.

Afin d'obtenir une meilleure délimitation des domains ou points magnétisés formés sur le support d'enregistrement, on a proposé de magnétiser ce support en utilisant le mode d'enregistrement dit "transversal", c'est-à-dire de manière telle que, dans chacun des domaines magnétisés ainsi formés, l'induction magnétique présentée par chaque domaine soit perpendiculaire à la surface de ce support. Un tel mode de magnétisation se révèle particulièrement intéressant dans le cas des machines imprimantes magnétiques où, pour obtenir une image imprimée de haute définition, il est nécessaire d'enregistrer sur le support une image latente magnétique dont les différents points constitutifs sont très petits et très proches les uns des autres. Pour enregistrer cette image latente magnétique on a utilisé, dans l'art antérieur, un transducteur comprenant une pluralité de têtes magnétiques disposées les unes à côté des autres et alignées suivant une direction perpendiculaire à la direction de déplacement du support d'enregistrement, chacune de ces têtes comportant un mince noyau magnétique sur lequel est bobiné un enroulement d'excitation, ce noyau ayant sensiblement la forme d'un U et étant profilé de manière à présenter, à l'une de ses extrémités, un pôle d'enregistrement relativement étroit, et, à son autre extrémité, un pôle de fermeture du flux, relativement large, ces deux pôles étant placés au contact ou à proximité immédiate de la surface du support d'enregistrement.

Ces têtes permettant d'obtenir sur le support d'enregistrement des points magnétisés parfaitement délimités dont la taille est relativement petite, c'est-à-dire présente, par exemple, sur la surface de ce support, une section carrée de l'ordre de 100 à 200 μm de côté. Mais elles ont pour inconvénient de comporter chacune un noyau qui, au cours de la fabrication, doit être usiné avec une très grande précision si l'on veut que les points magnétisés formés par ces différentes têtes aient des tailles sensiblement identiques. En outre, avec ces têtes, le temps nécessaire à la formation d'un point magnétisé sur le support d'enregistrement est toujours relativement long et excède, en général, six microsecondes, ce qui, naturellement, limite les performances de la machine dans laquelle ces têtes sont utilisées.

On peut remédier à ces inconvénients en faisant appel à des têtes d'enregistrement dont le noyau magnétique, pourvu d'un enroulement d'excitation, a la forme d'une tige ou d'une aiguille, les noyaux de ces têtes ayant chacun une extrémité disposée au moins à proximité immédiate de la surface du support d'enregistrement, ces extrémités étant alignées, les unes à la suite des autres, suivant une direction perpendiculaire à la direction de déplacement du support d'enregistrement. Avec ces têtes, dont le noyau est facile à fabriquer, le temps nécessaire à l'enregistrement d'un point magnétisé ne dépasse pas deux microseconds. Cependant, la mise en place de ces têtes à l'intérieur d'un même transducteur a toujours été une opération difficile à réaliser, en raison notamment de la petitesse du diamètre des noyaux et de la faible rigidité présentée par ces derniers.

C'est ainsi que, dans un mode de réalisation qui a été décrit et représenté dans le brevet N° 2.228.253, dans lequel les noyaux filiformes ont un diamètre voisin de 0,8 millimètre, cette mise en place est obtenue en perçant d'abord, dans une première plaque-support, une première série de trous alignés et ayant chacun un diamètre suffisant pour permettre l'engagement, avec un faible jeu, de l'une des deux extrémités d'un noyau, en insérant ensuite chaque noyau muni de son enroulement dans chacun de ces trous, afin de le maintenir en place sur cette première plaque-support, en perçant dans une seconde plaque-support une seconde série de trous, de manière que ces derniers se trouvent à l'aplomb des trous de la première série, et en engageant enfin l'autre extrémité de chaque noyau dans le trou correspondant de cette seconde série.

Ce mode d'assemblage, qui peut être mis en œuvre dans le cas où les noyaux magnétiques ont un diamètre au moins égal à 0,5 millimètre, ne peut être envisagé lorsqu'on désire réaliser un transducteur magnétique dont les noyaux magnétiques des têtes ont un diamètre très petit, par exemple inférieur à 0,1 millimètre. C'est qu'en effet, des noyaux magnétiques filiformes ayant un diamètre aussi faible ne présenteraient pas une rigidité mécanique suffisante pour subir, sans être déformés, les différentes opérations d'assemblage qui ont été exposées ci-dessus.

Afin de remédier à ces inconvénients, on peut songer à utiliser un procédé qui a été décrit dans la publication "Patents Abstracts of Japan, vol. 5, n° 146 (P-80) (818)" du 16 septembre 1981, ainsi que dans la demande de brevet japonais JP-A 5 680 815, ce procédé consistant à réaliser d'abord un bloc-support, en matière amagnétique, présentant sur l'une de ses faces une série de p gorges destinées à recevoir chacune un noyau magnétique pourvu d'un enroulement. Cet enroulement est constitué d'un conducteur filiforme, non isolé, qui est bobiné, en spires non jointives, sur un manchon cylindrique isolant. Lorsque tous les noyaux magnétiques ont été mis en place dans ces gorges, on superpose alors, sur le bloc-support, une plaque munie d'un circuit imprimé comportant des plages de contact, ces plages de contact étant disposées de telle sorte que, lorsque cette plaque est positionnée sur le bloc-support, chacune de ces plages se trouve en contact avec les spires situées aux extrémités de chacun des enroulements. Etant donné que, d'une part, chaque enroulement est formé d'un conducteur non isolé et que, d'autre part, chacun de ces enroulements fait saillie sur la surface du bloc-support, on comprend alors que, lorsque la mise en place de la plaque sur le bloc-support est terminée, chacune des deux extrémités de chaque enroulement se trouve électriquement connectée à une plage de contact correspondante de cette plaque. Cependant, dans ce procédé, il est nécessaire que tous les enroulements soient rigoureusement positionnés afin que leurs extrémités à connecter soient toutes situées dans un même plan. Dans ces conditions, on conçoit que la mise en place des noyaux et de leurs enroulements dans les gorges du bloc-support est une opération délicate, longue et coûteuse et que ce procédé ne peut donc pas être envisagé lorsqu'on veut réaliser un transducteur magnétique comportant un très grand nombre de noyaux et d'enroulements, ces noyaux ayant un diamètre relativement petit, c'est-à-dire, par exemple, inférieur à 0,1 millimètre.

La présente invention propose un procédé qui permet de réaliser un transducteur magnétique comportant plusieurs têtes à noyaux magnétiques filiformes, même dans le cas où ces noyaux ont un diamètre très faible, c'est-à-dire inférieur à 0,5 millimètre.

Plus précisément, la présente invention concerne un procédé pour fabriquer un transducteur magnétique adapté pour l'enregistrement et/ou la lecture d'informations sur un support magnétique, ce transducteur comportant au moins une rangée de p têtes magnétiques, chacune de ces têtes étant constituée d'un noyau magnétique allongé pourvu d'un enroulement d'excitation, ce procédé consistant à réaliser au moins un bloc-support, en matière amagnétique, présentant sur l'une de ses faces une série de p gorges, et à former au moins un enroulement de fil conducteur isolé sur chaque noyau magnétique, ce procédé étant caractérisé en ce que, chaque enroulement présentant, en plus de sa portion bobinée, deux portions non bobinées, et chacune desdites gorges ayant des dimensions suffisantes pour permettre d'y loger un noyau magnétique pourvu de son enroulement, il consiste en outre:

– à placer chacun des noyaux ainsi pourvus dans chacune desdites gorges, de manière que seules les portions non bobinées desdits fils conducteurs fassent saillie sur ladite face,

– à combler lesdites gorges munies de ces noyaux, à l'aide d'une substance amagnétique durcissable,

– à rectifier ladite face, après durcissement de cette substance, de façon à sectionner lesdites portions desdits conducteurs en saillie sur cette face et à faire apparaître ainsi des pastilles de contact constituant les extrémités des enroulements enrobés dans cette substance durcie, ces pastilles de contact étant destinées à permettre de raccorder ces enroulements à un circuit électrique de commande.

L'invention sera mieux comprise et d'autres buts et avantages de celle-ci apparaîtront mieux dans la description suivante, donnée à titre d'exemple non limitatif, et en se référant aux dessins annexés sur lesquels:

– Les figures 1A à 1J illustrent les différentes phases d'un premier mode de mise en œuvre du procédé de fabrication qui permet, selon l'invention, d'obtenir un transducteur magnétique,

– Les figures 2A à 2H illustrent différentes phases d'un second mode de mise en œuvre du procédé de fabrication qui permet, selon l'invention, d'obtenir un transducteur magnétique,

– La figure 3 est une vue schématique montrant la disposition respective des têtes magnétiques qui équipent un transducteur magnétique capable d'être fabriqué selon le procédé de l'invention,

– La figure 4 est une vue à grande échelle montrant certains détails relatifs aux phases illustrées par les figures 1C, 1D et 1E,

– La figure 5 est une vue à grande échelle montrant un détail de réalisation des connexions établies au cours de la phase illustrée par la figure 2F,

– La figure 6 est une vue en coupe d'une partie du transducteur représenté sur la figure 1J,

– La figure 7 est une vue de la face inférieure du transducteur représenté sur la figure 1J.

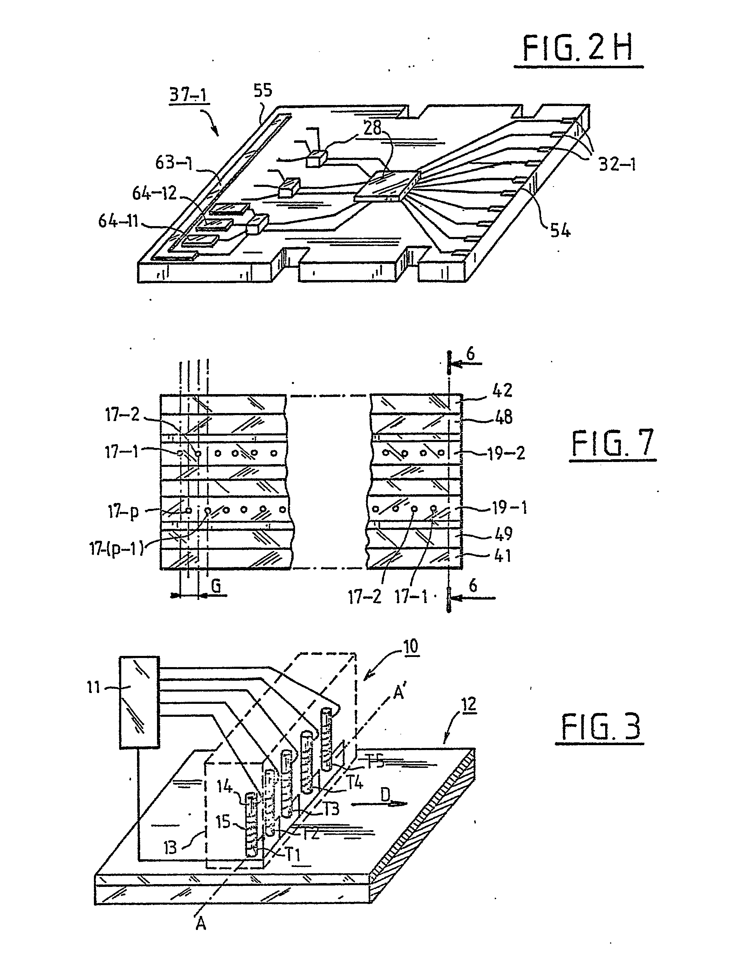

Sur la figure 3, on a représenté, de manière très schématique, un transducteur magnétique 10 qui, recevant des signaux électriques représentatifs de données envoyés par une unité de commande 11, réalise l'enregistrement de ces données, sous forme de zones magnétisées, sur un support d'enregistrement magnétique 12. Il faut cependant signaler que, bien que ce transducteur soit utilisé ici pour l'enregistrement de signaux, ce même transducteur pourrait également servir à détecter la présence de zones magntisées enregstrées sur un support d'enregistrement magnétique, afin de les convertir en signaux électriques. Un tel transducteur, qui permet l'enregistrement ou la lecture d'informations sur un support magnétique, comporte habituellement une pluralité de têtes magnétiques T1, T2, T3, etc... qui, comme le montre la figure 3, sont montées à l'intérieur d'un bloc-support 13, l'ensemble constitué par ces têtes magnétiques et ce bloc-support étant ordinairement désigné sous le nom de module. Ces têtes, qui sont du type de celles qui ont été accessoirement décrites dans la demande de brevet français publiée sous le N° 2.228.253 et dans le brevet des Etats-Unis d'Amérique N° 3.301.948, comprennent chacune un noyau magnétique 14, en forme d'aiguille, constitué d'un matériau magnétique doux, tel que l'alliage fer-silicium contenant environ 4% de silicium par exemple, ce noyau étant entouré d'un enroulement 15 qui peut être sélectivement excité par les signaux électriques délivrés par l'unité de commande 11. Ainsi qu'on peut le voir sur la figure 3, les noyaux des différentes têtes T1, T2, T3, etc...., sont placés les uns à côté des autres, perpendiculairement à la surface du support d'enregistrement 12, et leurs extrémités inférieures sont alignées suivant une direction AA' qui, parallèle à la surface du support 12, forme un angle non nul avec la direction de déplacement D de ce support. Dans l'exemple de réalisation illustré par la figure 3, cette direction AA' est perpendiculaire à la direction de déplacement D.

Bien que, pour des raisons de simplification, on n'ait représenté que cinq têtes magnétiques T1 à T5 sur la figure 3, on comprendra que le nombre de têtes magnétiques du transducteur 10 peut être différent de celui qui figure sur les dessins. On considèrera que, dans l'exemple préféré de réalisation qui sera décrit plus loin, le transducteur comporte au moins une rangée de deux cent cinquante six noyaux magnétiques alignés suivant une même direction AA', chaque noyau ayant un diamètre pratiquement égal à soixante-dix microns, ces noyaux ayant un espacement de centre à centre sensiblement égal à deux cent douze microns. Dans ces conditions, on peut, en excitant pendant un bref instant les enroulements bobinés sur ces noyaux, obtenir sur le support d'enregistrement 12 des zones magnétisées pratiquement ponctuelles qui, dans une direction parallèle à la direction AA', sont réparties à un pas de 0, 212 mm. Il est cependant possible, comme on le verra plus loin, d'obtenir sur le support d'enregistrement 12 des zones magnétisées ponctuelles réparties à un pas plus faible, en prévoyant dans le transducteur 10, en plus de la rangée de têtes magnétiques alignées suivant la direction AA', au moins une autre rangée de têtes magnétiques alignées suivant une direction parallèle à la direction AA', mais décalées d'une fraction de pas par rapport aux têtes magnétiques de la première rangée.

Dans la forme de réalisation illustrée par la figure 3, les circuits 11 qui commandent l'excitation des enroulements des différentes têtes T1, T2, etc....sont tous logés à l'extérieur du module 10. Il faut cependant signaler que cette forme de réalisation n'est pas exclusive de la présente invention et que, comme on le verra d'ailleurs plus loin, une partie de ces circuits pourra prendre place à l'intérieur du module.

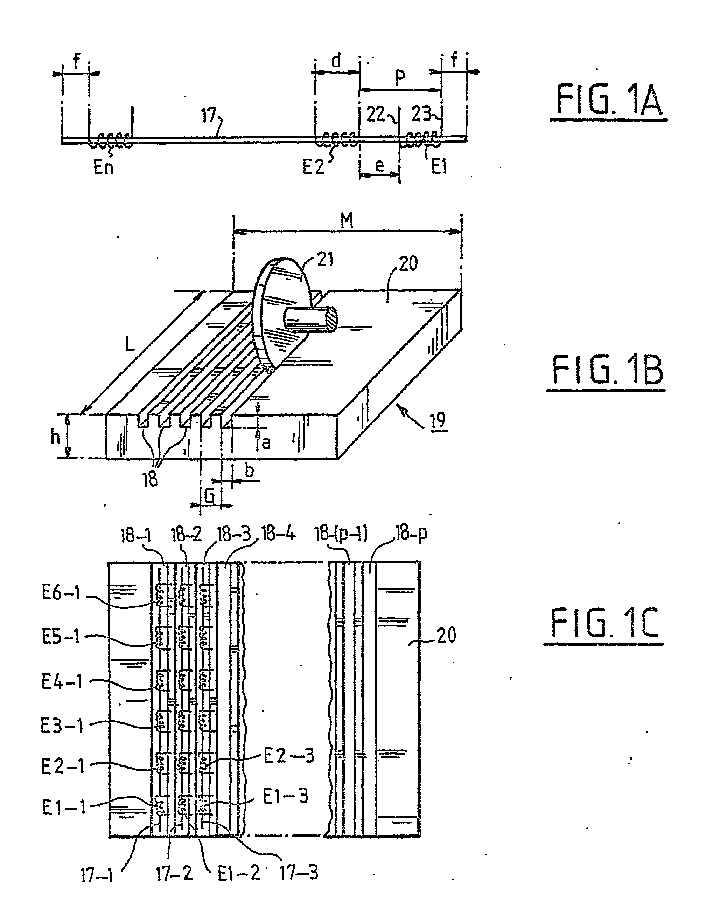

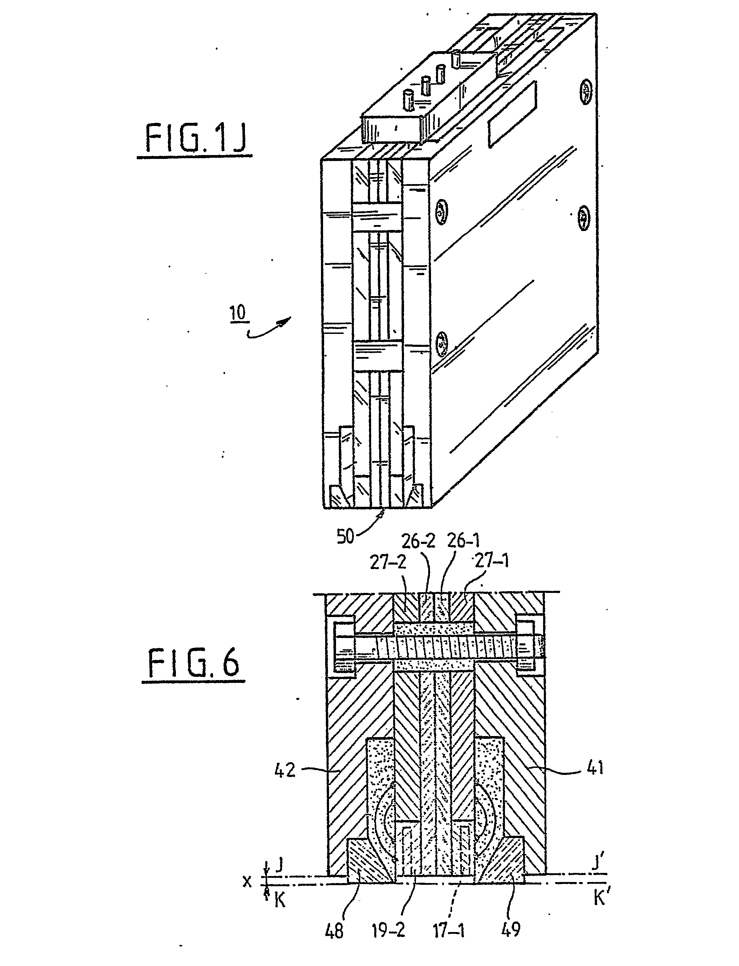

On va maintenant décrire, en se référant aux figures 1A à 1J, les phases successives d'un premier mode d'exécution du procédé de l'invention qui permet d'obtenir un transducteur magnétique du type de celui qui a été schématiquement représenté sur la figure 3. Ce procédé nécessite pour sa mise en oeuvre une pluralité de fils formés d'un matériau magnétique doux, ces fils étant destinés à constituer, ainsi qu'on le verra plus loin, les différents noyaux des têtes magnétiques du transducteur. Sur la figure 1A, l'un de ces fils, portant la référence 17, a été représenté. Le matériau magnétique doux qui, dans l'exemple décrit, a été préférentiellement choisi pour constituer chacun de ces fils est un alliage fernickel qui est fabriqué industriellement par la Société Métallurgique d'Imphy sous le nom de "Anhyster DS", cet alliage contenant 50% de nickel et 50% de fer. Il faut néanmoins signaler que ce matériau n'est pas exclusif de l'invention et que chaque fil 17 pourrait être réalisé en tout autre matériau magnétique doux. On forme alors, sur chacun de ces fils, un nombre n, au moins égal à 1, d'enroulements identiques E1, E2, ....,En. Dans le cas où plusieurs enroulements sont formés sur un même fil 17, ces enroulements sont espacés régulièrement sur toute la longueur du fil. On considèrera, dans l'exemple décrit, que chaque fil 17 a un diamètre de soixante-dix microns et une longueur égale à cinquante millimètres. Sur la figure 1A, on a désigné par d la longueur de chaque enroulement, par e l'écartement entre deux enroulements voisins, par f la distance qui sépare le premier enroulement E1 de l'extrémité du fil 17 la plus proche de cet enroulement, et par P le pas selon lequel les n enroulements E1 à En sont répartis sur la longueur du fil 17. Le fil conducteur qui est utilisé dans l'exemple décrit pour constituer chacun de ces n enroulements est un fil de cuivre isolé dont le diamètre est égal à quarante microns. On considèrera, dans l'exemple décrit, que chaque enroulement comporte trente spires bobinées en une seule couche, de sorte que la longueur d de chaque enroulement est alors égale à 1,2 mm. Dans l'exemple décrit, l'écartement e entre deux enroulements voisins est égal à 1, 85 mm et le nombre n d'enroulements formés ainsi sur le fil 17 est égal à seize. Enfin, dans l'exemple décrit, la distance f qui sépare l'enroulement E1 de l'extrémité du fil 17 qui la plus proche de cet enroulement, de même que celle qui sépare l'enroulement En de l'autre extrémité de ce fil, est pratiquement égale à 2mm. Le bobinage de ces enroulements sur chaque fil 17 peut être réalisé de différentes manières, par exemple en faisant appel à une machine bobineuse de type connu. La longueur du fil conducteur utilisé pour former chacun de ces enroulements est telle que, comme on peut le voir sur la figure 1A, ce fil présente une portion bobinée constituant l'enroulement proprement dit, et deux portions non bobinées 22 et 23.

Dans le procédé de l'invention, on réalise par ailleurs un élément-support 19, en matériau amagnétique, qui, comme le montre la figure 1B, présente, sur l'une 20 de ses faces, une série de p gorges 18 destinées à recevoir chacune l'un des fils 17, chacun de ces fils étant pourvu de ses n enroulements E1 à En. Dans l'exemple de réalisation illustré par la figure 1B, où cet élément - support est constitué d'une plaquette de forme parallélépipédique dont l'épaisseur h est très petite par rapport aux deux autres dimensions L et M de cette plaquette, ces gorges 18 sont formées par sciage ou meulage en pratiquant sur une grande face 20 de cette plaquette, à l'aide d'un outil approprié tel qu'une meule 21 par exemple, une série d'entailles s'étendant toutes parallèlement à l'un des côtés, de longueur L, de cette face 20, la profondeur a et la largeur b ces entailles étant suffisamment grandes pour permettre à chaque entaille de servir de logement à un fil 17 pourvu de ses n enroulements E1 à En. C'est ainsi que, dans l'exemple décrit, chacune de ces entailles ou gorges a une profondeur pratiquement égale à 190 μm et une largeur pratiquement égale à 170 μm. La plaquette 19 sur laquelle ces gorges sont formées a, dans l'exemple décrit, les dimensions suivantes ;

M = 60 mm ; L = 51 mm ; h = 320 μm

Ainsi qu'on peut le voir sur la figure 1B, les gorges 18 sont pratiquées à intervalles réguliers sur la face 20 de la plaquette 19, parallèlement au côté de la longueur L de cette plaquette. On considèrera, dans l'exemple décrit que le pas G selon lequel ces gorges sont réparties sur la face 20 est égal à 212 μm, et que le nombre p de gorges ainsi formées est égal à 256.

La formation de gorges 18 de l'élément-support 19 peut être réalisée de manière différente de celle qui a été décrite ci-dessus. C'est ainsi, par exemple, que dans le cas où le matériau amagnétique constitutif de l'élément-support 19 serait formé d'une matière capable d'être moulée, ces gorges pourraient être réalisées au moment de la fabrication de cet élément-support, lors du coulage de cette matière dans un moule de forme appropriée.

La matière qui constitue l'élément-support 19 est une matière amagnétique, cette matière pouvant être aussi bien un matériau métallique amagnétique, tel que l'aluminium ou le cuivre, qu'un matériau isolant, tel que par exemple, le verre, la silice ou une résine époxy.

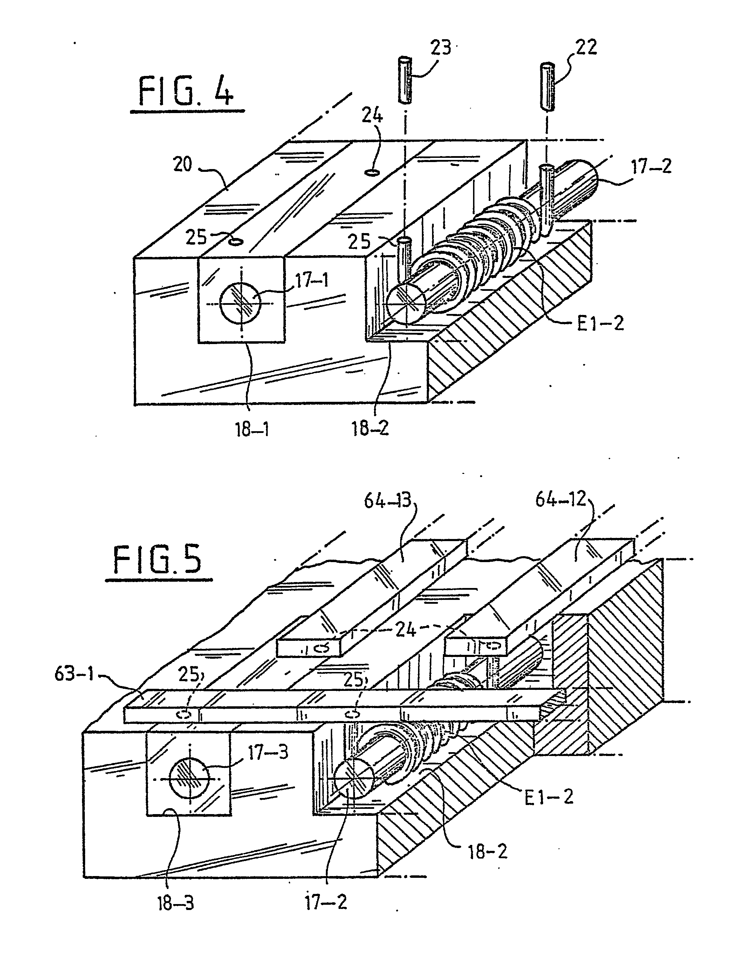

Dans chacune des gorges 18 de la plaquette 19, on place alors, comme le montre la figure 1C, un fil 17 pourvu de ses n enroulements E1 à En. Sur la figure 1C, on a pour des raisons de commodité, désigné ces différences gorges par la référence 18 suivie d'un indice représentant l'ordre dans lequel se succèdent ces gorges en allant de la gauche vers la droite de la figure. Sur cette même figure, on a désigné par les références 17-1, 17-2, 17-3, etc....., les fils placés respectivement dans les gorges 18-1, 18-2, 18-3, etc... En outre, les enroulements formés sur ces fils ont été désignés, sur cette figure, par les références E1, E2, ...., En suivies du même indice que celui du fil 17 qui les supporte. Sur la figure 1C, on n'a représenté, pour des raisons de simplification, que six enroulements sur chacun des fils 17-1, 17-2, 17-3, etc..... Mais on comprendra que le nombre d'enroulements sur chaque fil peut être différent de celui qui est représenté sur la figure 1C et que, dans l'exemple décrit, chacun de ces fils comprend seize enroulements référencés E1-1, E2-1, ...., E16-1 pour le fil 17-1, E1-2, E2-2, ...., E16-2, pour le fil 17-2 etc.... Ainsi qu'on peut le voir sur la figure 1C, les fils 17-1, 17-2, 17-3,......., sont placés dans les gorges respectives 18-1, 18-2, 18-3,......, de telle manière que tous les enroulements E1 de ces fils (c'est-à-dire les enroulements E1-1, E1-2, E1-3, etc...) se trouvent alignés suivant une direction perpendiculaire à la direction des gorges. Par ailleurs, la mise en oeuvre de ces fils dans les gorges est réalisée de telle sorte que les portions non bobinées du fil conducteur isolé qui a servi à former chaque enroulement fassent saillie sur la face 20 de la plaquette 19. Cette disposition est montrée de manière plus visible sur la figure 4 où on a représenté, à grande échelle, une partie du fil 17-2, après sa mise en place dans la gorve 18-2, cette partie étant pourvue de l'enroulement E1-2. On voit alors, sur la figure 4, que les deux portions non bobinées 22 et 23 du fil conducteur isolé qui a été utilisé pour former l'enroulement E1-2 font saillie sur la face 20 de la plaquette, ces deux portions s'étendant suivant une direction perpendiculaire à cette face.

La mise en place, dans les gorges 18, des fils 17 pourvus de leurs enroulements peut être effectuée, soit manuellement, soit, de préférence, au moyen d'une machine d'insertion automatique de type approprié. Lorsque cette mise en place est terminée, les gorges 18 sont comblées à l'aide d'une substance isolante amagnétique durcissable. Cette substance peut être, par exemple, celle résultant du mélange d'un durcisseur et de la résine qui a été décrite dans le brevet français N° 2.098.620.

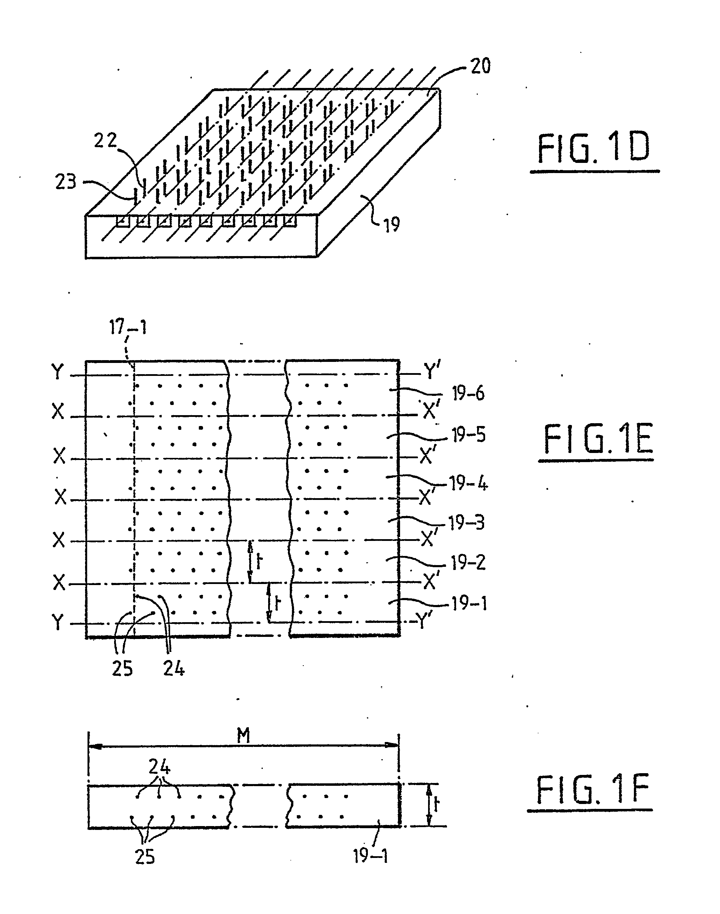

Lorsque cette opération est terminée, la plaquette 19 présente, après durcissement de cette substance, l'aspect qui est montré sur la figure 1D. Les gorges 18 étant maintenant comblées, la face 20 de la plaquette 19 apparaît alors pratiquement plate, ne laissant dépasser de sa surface que les portions non bobinées 22 et 23 des enroulements, ces derniers étant désormais noyés dans la substance durcie. La face 20 de la plaquette 19 est alors soumise à une opération de rectification ou d'aplanissement qui a pour but de rendre cette face parfaitement plane et de sectionner ainsi les portions 22 et 23 qui font saillie sur cette face. Ainsi qu'on peut le comprendre en se référant à la figure 4 sur laquelle la gorge 18-1 a été représentée dans l'état sous lequel elle se présente lorsque cette opération est terminée, le sectionnement des portions de conducteurs 22 et 23 a pour effet de faire apparaître, sur la face 20, des pastilles de contact 24 et 25 qui, constituant les extrémités des enroulements noyés dans la substance durcie, sont destinées à être raccordées, comme on le verra plus loin, à un circuit de command prévu pour la commande sélective de l'excitation des différentes têtes.

Lorsque cette opération est terminée, la plaquette 19 est soumise à un contrôle électrique consistant à relier à une source de courant les deux pastilles de contact 24 et 25 d'un même enroulement, afin de vérifier, par passage du courant électrique dans cet enroulement, si les spires constitutives de cet enroulement n'ont pas été coupées ou endommagées au cours de l'opération de rectification. Après quoi, la plaquette 19 est découpée, par exemple au moyen d'une scie diamantée, en n blocs successifs de même largeur t, n étant le nombre d'enroulement formés sur chaque fil magnétique 17. Comme on peut le voir sur la figure 1E, ce découpage est réalisé suivant des lignes de coupe XX' perpendiculaires à la direction des fils magnétiques 17, chaque ligne de coupe étant équidistante des pastilles de contact 24 d'un bloc et des pastilles de contact 25 du bloc voisin. Dans l'exemple décrit, ce découpage est effectué à l'aide d'une scie diamantée capable de former un trait de scie dont la largeur est très faible, c'est-à-dire au plus égale à 50 μm. Compte-tenu des valeurs indiquées plus haut concernant la longueur d de chaque enroulement et l'écartement e entre deux enroulements consécutifs sur un même fil magnétique 17, chacun des blocs résultant de ce découpage présente une largeur t qui, dans l'exemple décrit, est égale à trois millimètres. On peut remarquer par ailleurs que, d'après la valeur donnée plus haut au sujet de la dimention L de la plaquette 19, les deux blocs extrêmes, tels que ceux qui sont désignés par les références 19-1 et 19-6 sur la figure 1E, qui sont issus du découpage de cette plaquette suivant les lignes de coupe XX', ont une largeur qui est supérieure à celle des autres blocs. C'est pourquoi ces deux blocs extrêmes sont soumis à un découpage supplémentaire, suivant des lignes de coup YY' parallèles aux lignes XX', ce découpage supplémentaire ayant pour effet d'amener ces deux blocs à la même largeur t que les autres blocs.

L'opération de découpe de la plaquette 19 en n blocs a pour effet de scinder chaque fil magnétique 17 en n parties pourvues chacune d'un enroulement, chacune de ces parties formant ainsi un noyau magnétique constitutif d'une tête magnétique. Etant donné que, comme on l'a vu plus haut, le nombre de fils magnétiques mis en place dans la plaquette 19 est égal à p, chacun des n blocs issus du découpage de cette plaquette comporte donc p noyaux magnétiques, chacun des ces noyaux étant pourvu d'un enroulement d'excitation. L'un de ces blocs a été représenté, à titre d'illustration, sur la figure 1F.

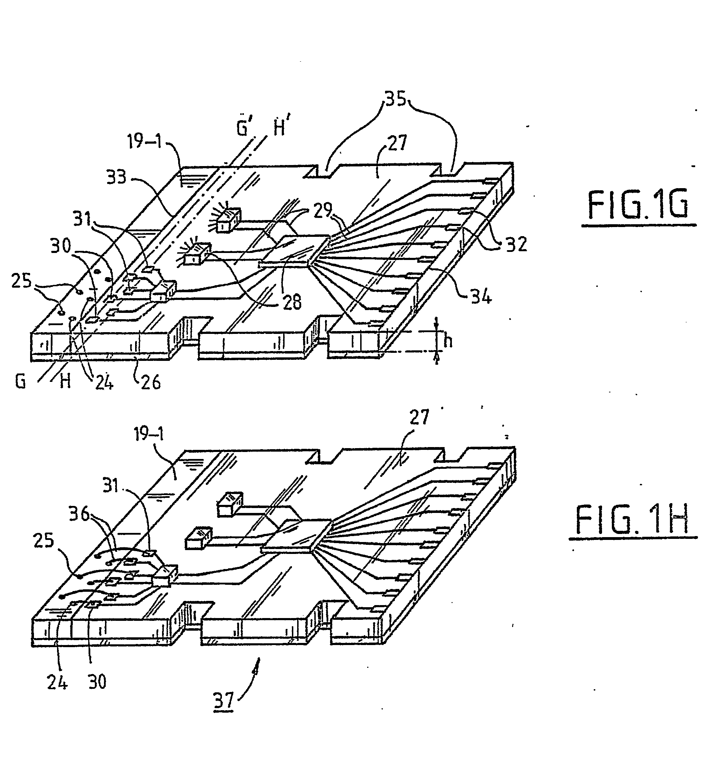

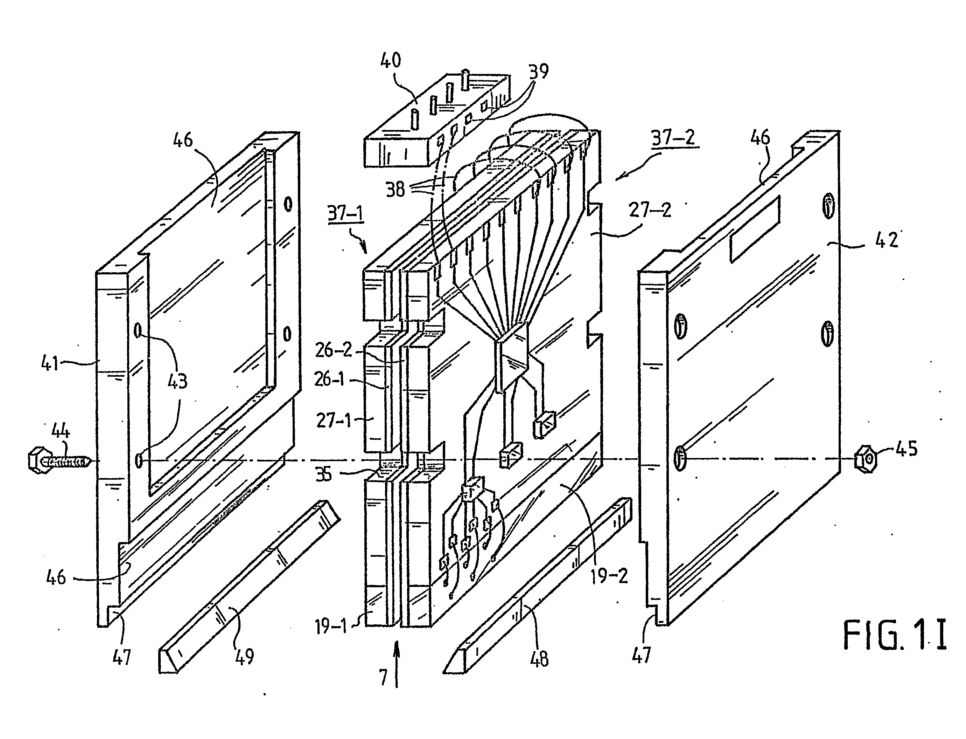

Lorsque cette opération de découpage est terminée, on place, comme le montre la figure 1G, l'un des blocs ainsi obtenus, par exemple le bloc 19-1, sur une fine feuille 26 de matière amagnétique, puis, après avoir fixé ce bloc sur cette feuille le long de l'un de ses bords, on lui accole une carte de connexion 27, appelée habituellement substrat, qui, pourvue d'un ensemble logique de commande constitué de composants électroniques 28, est fixée à son tour sur la feuille 26 contre l'un des bords longitudinaux du bloc 19-1. Cet ensemble logique de commande fait partie de l'unité de commande 11 dont on a parlé plus haut. La feuille 26, qui est destinée à faciliter l'opération d'assemblage du bloc 19-1 et de la carte 27, est constituée, dans l'exemple décrit, d'une matière isolante souple, telle que celle vendue commercialement sous le nom de "Mylar" (marque déposée), cette feuille ayant une épaisseur très faible qui, dans l'exemple décrit, est pratiquement égale à 0,02 millimètre. La carte de connexion 27 est formée d'une plaque rectangulaire rigide en matière isolante, munie, sur l'une de ses faces, d'un circuit électrique imprimé 29 qui assure les liaisons indispensables entre les différents composants électroniques 28 montés sur cette carte, ainsi qu'entre ces composants et des plages de contact 30, 31 et 32 dont cette carte est pourvue. La matière isolante qui constitue cette plaque 27 peut être une résine organique dure, telle que, par exemple, un polycarbonate ou encore tout autre matière présentant une résistivité électrique élevée, telle que, par exemple, l'alumine. Il faut signaler par ailleurs que cette carte 27 présente une épaisseur de même ordre de grandeur que celle du bloc auquel elle est accolée. C'est ainsi que, dans l'exemple de réalisation illustré par la figure 1G, le bloc 19-1 et la carte 27 ont pratiquement la même épaisseur h. Par ailleurs, la dimension de la carte 27, considérée suivant une direction parallèle à son bord 33 qui touche le bloc 19-1, est pratiquement égale à la longueur M de ce bloc, cette longueur étant égale, dans l'exemple décrit, à 60 mm.

Il faut encore signaler que le nombre de plages de contact 30 de la carte 27 est égal à celui des plages de contact 31 de cette carte, et que le nombre total de ces plages 30 et 31 est égal au nombre totale des pastilles de contact 24 et 25 du bloc 19-1. Ainsi, à chaque plage de contact de la carte 27 correspond une pastille de contact du bloc 19-1. On peut encore voir, sur la figure 1G, que les plages de contact 30 est 31 sont situées près du bord 33 de la carte 27 qui se trouve contre le bloc 19-1, les plages de contact 30 étant alignés suivant une direction GG' parallèle à ce bord 33 et les plages de contact 31 étant alignées suivant une direction HH' parallèle à la direction GG' et au bord 33. Les plages de contact 32 sont disposées le long du bord 34 de la carte qui, comme le montre la figure 1G, est opposé au bord 33 de cette carte. Ainsi qu'on peut le voir encore sur la figure 1G, la carte 27 et la feuille 26 sont pourvues, sur leurs deux autres bords, d'échancrures 35 destinées à permette le passage d'éléments de fixation qui, comme on la verra plus loin, sont mis en place lors de la phase d'assemblage finale du transducteur.

Lorsque l'opération d'assemblage du bloc 19-1 de la carte 27 et de la feuille 26 est terminée, on réalise alors, comme le montre la figure 1H, les connexions électriques entre les pastilles de contact 24 du bloc 19-1 et les plages de contact 30 de la carte 27 d'une part, et entre les pastilles de contact 25 de ce bloc et les plages de contact 31 de cette carte d'autre part, ces connexions étant établies, au moyen de fils conducteurs 36, de telle manière que chacune de ces plages de contact se trouve reliée à la pastille de contact correspondante. Cette opération peut être effectuée, soit manuellement, soit, de préférence, de manière entièrement automatique, à l'aide d'une machine de câblage appropriée, de type connu. L'ensemble que l'on obtient, lorsque cette opération de câblage est terminée, a été représenté schématiquement sur la figure 1H, cet ensemble étant désigné sur cette figure par la référence 37.

Il est utile de rappeler maintenant que les têtes magnétiques qui sont incorporées à l'intérieur de chacun des blocs 19-1, 19-2, etc...., et qui sont constituées chacune d'un noyau magnétique pourvu d'un enroulement, sont réparties, dans chaque bloc, suivant un pas G qui, dans l'exemple décrit, est égal à 212 μm. Dans le cas où on désire réaliser, à partir de ces blocs, un transducteur magnétique capable de former, sur un support d'enregistrement, des zones magnétisées ponctuelles réparties selon un pas de 106 μm, on utilise alors deux ensembles analogues à celui représenté sur la figure 1H, et on les place dos-à-dos, comme le montre la figure 1I, ces deux ensembles étant désignés, sur cette dernière figure, par les références 37-1 et 37-2.

Sur la figure 1I, les éléments constitutifs de chacun des deux ensembles 37-1 et 37-2 ont été désignés par les mêmes références que cells qui figurent sur les éléments analogues de la figure 1H, mais suivies du chiffre 1 pour les éléments constitutifs de l'ensemble 37-1 et du chiffre 2 pour les éléments constitutifs de l'ensemble 37-2. Il v a lieu de signaler ici que, lors de l'opération d'assemblage de chacun de ces deux ensembles, les blocs 19-1 et 19-2 de ces ensembles sont positionnés par rapport à leurs cartes respectives 27-1 et 27-2, de telle manière que, lorsque ces deux cartes sont placées dos-à-dos, en superposition l'une sur l'autre comme le montre la figure 1I, les noyaux 17-1, 17-2, etc..., du bloc 19-1 sont décalés d'un demi-pas par rapport aux noyaux 17-1. 17-2. etc.... du bloc 19-2, ainsi qu'on peut le voir sur la figure 7. Les deux ensembles 37-1 et 37-2 étant mis dos-à-dos et maintenus en superposition l'un sur l'autre, on réalise alors, comme le montre la figure 1I, les connexions électriques nécessaires à l'excitation sélective des différentes têtes magnétiques du transducteur, cette opération consistant à relier, au moyen de conducteurs souples 38, les plages de contact 32 de la carte 27-2, soit à des plages de contact 32 de la carte 27-1, soit à des bornes de contact 39 d'un connecteur 40 destiné à permettre ultérieurement de raccorder le transducteur à un circuit de commande extérieur, toutes ces connexions étant réalisées en dépendance du schéma électrique établi pour la commande de cette excitation sélective des têtes. Après quoi, on place, de part et d'autre de l'assemblage ainsi obtenu, deux capots rigides 41 et 42, munis chacun, le long de deux de leurs bords opposés, de trous 43 destinés à l'engagement d'éléments de fixation. Tout en maintenant cet assemblage entre ces deux capots, on introduit alors dans ces trous 43 des éléments de fixation, constitués par exemple par des boulons 44 et des écrous 45 qui passent, au travers des échancrures 35 ménagées dans les cartes 27-1 et 27-2, puis on bloque le tout au moyen de ces éléments de fixation, de manière à obtenir une structure rigide et indéformable qui, dans la suite du texte, sera désignée sous le nom de module. Afin que les composants électroniques 28 qui sont implantés sur les cartes des ensembles 37-1 et 37-2 d'une part, et que les fils conducteurs 36 d'autre part, ne se trouvent pas détériorés au cours de cette opération, les capots 41 et 42 sont pourvus d'évidements 46 qui sont usinés de manière à laisser la place nécessaire au logement de ces fils et de ces composants lorsque ces deux ensembles 37-1 et 37-2 sont serrés entre ces deux capots. La figure 1I montre encore que les capots 41 et 42 présentent chacun une entaille 47 formée le long de leur bord situé à l'aplomb de chacun des blocs 19-1 et 19-2, chacune de ces deux entailles servant à la fixation, par un moyen approprié tel qu'un collage par exemple de l'un de deux patins 48 et 49 destinés à venir ultérieurement au contact de la surface d'un support d'enregistrement magnétique et à permettre ainsi aux extrémités des noyaux magnétiques enrobés à l'intérieur des blocs 19-1 et 19-2 de rester hors du contact de cette surface, mais à proximité immédiate de celle-ci. Ces deux patins 48 et 49 sont réalisés en une matière présentant un faible coefficient de frottement et un faible coefficient de dilatation thermique. C'est ainsi que, dans l'exemple décrit, ces patins sont formés d'une résine polyimide dans laquelle ont été incorporées des particules de graphite.

Le module que l'on obtient lorsque toutes ces opérations sont terminées est alors soumis à un surmoulage qui consiste à couler dans les évidements 46 des capots 41 et 42, ainsi que dans les échancrures 35, une résine isolante durcissable qui, non seulement assure un excellent isolement des circuits électriques logés dans ces évidements, mais renforce encore la rigidité mécanique du module. Lorsque ces évidements et ces échancrures sont ainsi remplies, ce modules présente l'aspect représenté sur la figure 1J. Après quoi, ce module 10 est soumis, sur sa face 50 sur laquelle apparaissent les extrémités des noyaux magnétiques, à une opération de rectification qui, comme le montre la figure 6, est effectuée sur les parties de cette face qui se trouvent en dehors des deux patins 48 et 49. Cette rectification permet d'amener ces parties dans un plan JJ' qui, parallèle au plan KK' passant par les faces de frottement des patins 48 et 49, est en retrait par rapport à ce dernier plan. Il faut signaler que l'écartement x qui sépare ces deux plans est toujours très petit. C'est ainsi que, dans l'exemple décrit, cet écartement a une valeur pratiquement égale à vingt microns. Lorsque cette opération de rectification est terminée, le module est soumis à un contrôle destiné à vérifier le bon fonctionnement des circuits électriques qu'il comporte, et peut ensuite être mis en place à l'intérieur de l'appareil d'enregistrement d'information auquel il est destiné.

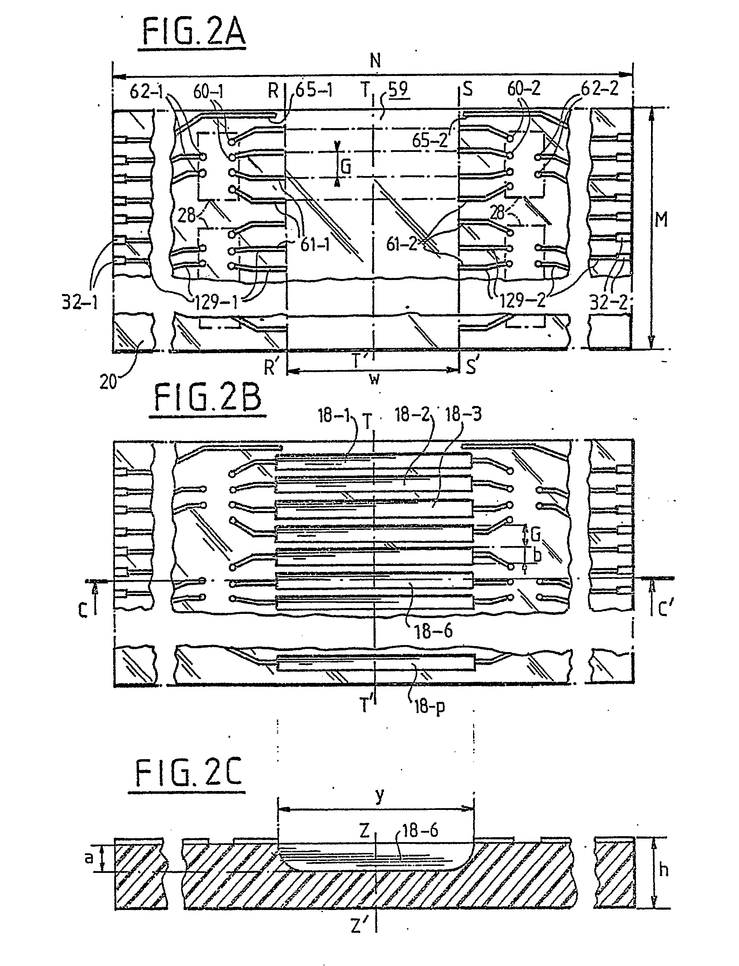

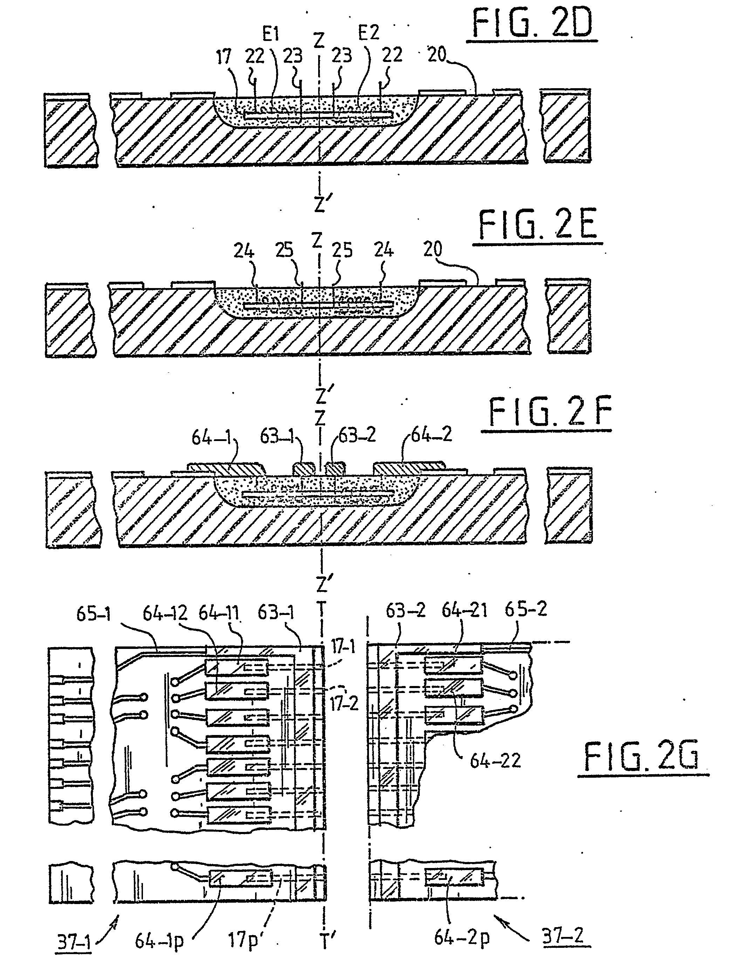

Le module 10 qui est représenté sur la figure 1J peut également être réalisé suivant un second mode d'exécution qui va être maintenant décrit en se référant en particulier aux figures 2A à 2H. Selon ce mode d'exécution, on part, comme le montre la figure 2A, d'un bloc-support 59, se présentant sous la forme d'une plaquette rectangulaire rigide, réalisée en un matériau isolant tel que, par exemple, l'alumine, cette plaquette ayant une épaisseur h très petite comparée à ses deux autres dimensions M et N. On considèrera, dans l'exemple décrit, que cette plaquette possède les dimensions suivantes :
M = 60 mm ; N = 80 mm ; h = 320 μm

Ainsi qu'on peut le voir la figure 2A, cette plaquette 59 est munie, sur l'une 20 de ses faces, de deux groupes 129-1 et 129-2 de circuits électriques imprimés, la configuration des conducteurs du groupe 129-1 étant symétrique de celle des conducteurs du groupe 129-2 par rapport à un plan de symétrie perpendiculaire à cette face et passant par l'axe médian TT' de la plaquette 59, cet axe TT' étant parallèle aux bords de dimensions M de cette plaquette. Ces deux groupes de circuits sont séparés l'un de l'autre par une région centrale délimitée par deux axes RR' et SS' parallèles à l'axe TT', ces deux axes RR' et SS' étant écartés l'un de l'autre d'une distance W qui, dans l'exemple décrit, est égale à huit millimètres. Les conducteurs qui constituent chacun des deux groupes de circuits se répartissent essentiellement en deux catégories différentes. C'est ainsi que les conducteurs qui appartiennent à la première de ces deux catégories sont ceux qui, comme on peut le voir sur la figure 2A, ont l'une de leurs extrémités située sur l'un ou l'autre des deux axes RR' et SS'. Ces conducteurs, qui aboutissent à des bornes de connexion 60-1 et 60-2 de la plaquette 59 sont établis de manière à présenter, au voisinage de l'un ou de l'autre des axes RR' et SS', des portions rectilignes, dénommées bandelettes conductrices, qui, désignées par la référence 61-1 pour les conducteurs du group 129-1 et par la référence 61-2 pour les conducteurs du groupe 129-2, sont parallèles entre elles, et sont orientées suivant une direction perpendiculaire à l'axe TT', ces bandelettes conductrices étant uniformément réparties, à un pas G qui, dans l'exemple décrit, est égal à 212 μm. Les autres conducteurs qui, dans chacun des groupes 129-1 et 129-2, appartiennent à la seconde catégorie, sont établis pour assurer les liaisons entre d'autres bornes de connexion 62-1 et 62-2 et des plages de contact 32-1 et 32-2 dont la plaquette 59 est pourvue, les plages de contact 32-1 et 32-2 étant établies, comme le montre la figure 2A, le long de chacun des deux bords, de longueur M, de cette plaquette. Les bornes de connexion 60-1, 60-2, 62-1 et 62-2 sont destinées à permettre le montage ultérieur de composants électroniques 28 sur la plaquette 59, ces composants étant représentés symboliquement en traits mixtes sur la figure 2A. Outre les deux catégories de conducteurs qui viennent d'être citées, chacun des groupes 129-1 et 129-2 comprend encore un conducteur, dit de retour, qui, désigné par l'une des références 65-1 et 65-2, est destiné, comme on le verra plus loin, à assurer le retour du courant d'excitation des différentes têtes magnétiques.

Etant donné que la configuration des conducteurs du groupe 129-1 est symétrique de celle des conducteurs du groupe 129-2 par rapport au plan de symétrie passant par TT', il y a sur la plaquette 59 autant de bandelettes conductrices 61-2 que de bandelettes conductrices 61-1, le nombre p de bandelettes conductrices 61-1 étant égal, dans l'exemple décrit à 256. En outre, chacune des bandelettes conductrices 61-2 se trouve dans le prolongement de la bandelette conductrice 61-1 qui lui est symétrique.

Sur la plaquette 59 ainsi constituée, on réalise alors, comme le montre la figure 2B, une série de p gorges 18-1, 18-2, ...., 18-p, orientées perpendiculairement à l'axe TT', ces gorges étant uniformément réparties suivant un pas G, chacune de ces gorges s'étendant entre deux bandelettes conductrices situées dans le prolongement l'une de l'autre. Sur la figure 2C, qui est une vue en coupe de la plaquette 59 suivant un plan de coupe indiqué par CC' sur la figure 2B, l'une de ces gorges a été représentée.Il y a lieu de signaler ici que, pour des raisons de clarté du dessin, le pas G d'espacement des bandelettes conductrices et des gorges et les dimensions de ces gorges n'ont pas été représentées à l'échelle sur les figures 2A, 2B et 2C. On considèrera, dans l'exemple décrit, que le pas G d'espacement des gorges est égal à 212 μm, et que chaque gorge présente une longueur y égale à 10 mm, une largeur b égale à 170 μm et une profondeur a égale à 190 μm. Par ailleurs, bien que, dans l'exemple décrit, ces gorges soient formées par meulage de la face de la plaquette 59 qui est pourvue de deux groupes 129-1 et 129-2 de circuits imprimés, ces gorges pourraient être obtenues de façon différente. C'est ainsi que, par exemple, dans le cas où le matériau isolant constitutif de la plaquette 59 serait formé d'une résine thermodurcissable, ces gorges pourraient être réalisées au moment de la fabrication de cette plaquette, lors du coulage de cette résine dans un moule de forme appropriée. Dans ce cas, la plaquette 9 devrait, après durcissement de cette résine, être soumise à des opérations de dépôt bien connues, afin d'être équipée des deux groupes de circuits imprimés.

Dans chacune des gorges de la plaquette 59, on met en place, comme le montre la figure 2D, un fil de matériau magnétique doux pourvu de deux enroulements E1 et E2, ce fil étant analogue à celui représenté sur la figure 1A. On considèrera, dans l'exemple décrit, que la longueur de chaque fil 17 est pratiquement égale à six millimètres. Ces fils sont placés dans les gorges 18-1, 18-2,...,18-p de la plaquette 59 de telle sorte que les deux enroulements E1 et E2 d'un même fil occupent des positions symétriques par rapport au plan de symétrie qui passe par l'axe TT', la trace de ce plan étant représentée par ZZ' sur les figures 2C à 2F. Dans ces conditions, tous les enroulements E1 de ces fils se trouvent alignés suivant une direction parallèle à ce plan. En outre, la mise en place des fils magnétiques 17 dans les gorges 18-1, 18-2,.....,18-p est réalisée de telle sorte que les portions non bobinées 22 et 23 du fil qui a servi à former chacun de ces enroulements fassent saillie sur la face 20 de la plaquette 59.

La mise en place, dans les gorges 18-1, 18-2,......,18-p, des fils magnétiques 17 pourvus de leurs enroulements peut être effectuée, soit manuellement soit, de préférence au moyen d'une machine d'insertion de type approprié. Lorsque cette mise en place est terminée, ces gorges sont comblées à l'aide d'une substance isolante durcissable, cette substance pouvant être celle qui a été mentionnée plus haut. Après durcissement de cette substance, la face 20 de la plaquette 59 est soumise, sur sa partie comprise entre les deux groupes 129-1 et 129-2 de circuits imprimés, à une opération de rectification, ce qui a pour effet de sectionner les portions de conducteurs 22 et 23 en saillie sur cette face et de faire apparaître ainsi sur cette face des pastilles de contact 24 et 25 constituant les extrémités des enroulements noyés dans la substance durcie. L'aspect que présente alors la plaquette 59 est celui montré en coupe sur la figure 2E.

Lorsque cette opération est terminée, la plaquette 59 est soumise à un contrôle électrique destiné à vérifier le bon état des conducteurs électriques constituant les enroulements.

Après quoi, on réalise, comme on peut le comprendre en regardant les figures 2F, 2G et 5, les différentes connexions électriques qui permettent aux bandelettes conductrices 61-1, 61-2 et aux conducteurs 65-1 et 65-2 d'être reliés aux pastilles de contact 24 et 25. C'est ainsi que les p pastilles de contact 24 qui sont situées à gauche du plan de symétrie passant par les axes ZZ' et TT' sur les figures 2F et 2G sont reliés chacune respectivement à l'une des p bandelettes conductrices 61-1 par l'intermédiaire de l'une de p barrettes métalliques conductrices, ces barrettes étant désignées par 64-11, 64-12, ...., 64-1p sur les figures 2G et 5. Les p pastilles de contact 25 qui se trouvent à gauche de ce plan sont toutes reliées entre elles et au conducteur 65-1 par l'intermédiaire d'une barrette métallique 63-1. De même, les p pastilles de contact 24 qui sont situées à droite de ce plan de symétrie sont reliées chacune respectivement à l'une des p bandelettes conductrices 61-2 par l'intermédiaire de l'une de p barrettes électriques conductrices qui, sur la figure 2G, sont désignées par 64-21, 64-22, ...., 64-2p. Enfin, les p pastilles de contact 25 qui se trouvent à droite de ce plan sont toutes reliées entre elles et au conducteur 65-2 par l'intermédiaire d'une barrette métallique conductrice 63-2. Dans l'exemple décrit toutes ces barrettes 63-1, 63-2, 64-11, 64-12, ...., 64-1p, 64-21, 64-22, ...., 64-2p sont formées par dépôt d'une couche métallique aux endroits désirés, en faisant appel à des méthodes connues telles que, par exemple, la pulvérisation cathodique à haute fréquence ou encore l'évaporation au canon à électron.

Lorsque toutes ces connexions ont été établies, on sectionne la plaquette 59 suivant son plan de symétrie, ce qui permet d'obtenir, comme le montre la figure 2G, deux ensembles 37-1 et 37-2 que l'on complète ensuite en montant des composants électroniques 28 sur chacun des groupes de circuits imprimés 129-1 et 129-2. Sur la figure 2H, l'un de ces ensembles, 37-1 ainsi complété, a été représenté. Sur cette figure 2H, on a désigné par 54 le bord de l'ensemble 37-1 le long duquel sont disposées les plages de contact 32-1 et par 55 le bord de cet ensemble qui est opposé au bord 54, ce bord 55 résultant du sectionnement de la plaquette 59 suivant le plan de symétrie.

Les opérations de montage qui sont entreprises ensuite sont analogues à celles qui ont été décrites plus haut en se référant aux figures 1I, 1J et 6. Pour cette raison, on ne reviendra pas sur le détail de ces opérations. On indiquera simplement que, dans l'exemple décrit où on désire obtenir un transducteur capable, de former, sur un support d'enregistrement, des zones magnétisées ponctuelles réparties selon un pas de 106 μm, on utilise alors deux ensembles analogues à celui représenté sur la figure 2H, ces deux ensembles 37-1 et 37-2 étant placés dos-à-dos et de telle sorte que les noyaux magnétiques de l'ensemble 37-1 soient décalés d'un demi-pas par rapport aux noyaux de l'ensemble 37-2. On réalise ensuite les connexions électriques nécessaires entre les plages de contact 32-1 et 32-2 de ces deux ensembles et les bornes de connexion 39 d'un connecteur 40 du type de celui montré sur la figure 1I. Puis on place, de part et d'autre de l'assemblage ainsi obtenu, deux capots rigides 41 et 42 que l'on rend solidaires l'un de l'autre au moyen d'éléments de fixation. Après montage de deux patins 48 et 49 sur ces deux capots, on bloque le tout de façon à obtenir un module rigide et indéformable que l'on soumet ensuite à un surmoulage et à une opération de rectification avant sa mise en place dans l'appareil d'enregistrement d'informations.

Bien que la description et les dessins annexés se rapportent à des modes préférés de réalisation de l'invention, il est entendu que l'invention comprend tous les moyens constituant des équivalents techniques de ceux décrits et illustrés, considérés isolément ou en combinaison et mis en oeuvre dans le cadre des revendications qui suivant. C'est ainsi, par exemple, que les fils conducteurs 36 qui, dans l'exemple illustré par la figure 1H, sont utilisés pour realiser les liaisons électriques entre les plages de contact de la carte 27 et les pastilles de contact du bloc 19-1 pourront être remplacées par des barrettes métalliques analogues à celles qui sont représentées sur la figure 2G.

**Revendications**

1. Procédé pour fabriquer un transducteur magnétique adapté pour l'enregistrement et/ou la lecture d'informations sur un support magnétique (12), ce transducteur comportant au moins une rangée de p têtes magnétiques (T1, T2, T3, etc ...), chacune de ces têtes étant constituée d'un noyau magnétique allongé pourvu d'un enroulement d'excitation, ce procédé consistant à réaliser au moins un bloc-support (tel que 19-1), en matière amagnétique, présentant sur l'une de ses faces (20) une série de p gorges (18-1, 18-2, ..., 18-p), et à former au moins un enroulement (tel que E1-1) de fil conducteur isolé sur chaque noyau magnétique (tel que 17-1), ce procédé étant caractérisé en ce que, chaque enroulement présentant, en plus de sa portion bobinée, deux portions non bobinées (22, 23), et chacune desdites gorges ayant des dimensions suffisantes pour permettre d'y loger entièrement un noyau magnétique pourvu de son enroulement, il consiste en outre :
   - à placer chacun des noyaux ainsi pourvus (17-1, 17-2, ..., 17-p) dans chacune desdites gorges (18-1, 18-2, ..., 18-p), de façon que seules les portions non bobinées (22, 23) desdits fils conducteurs fassent saillie sur ladite face (20),
   - à combler lesdites gorges munies de ces noyaux, à l'aide d'une substance amagnétique durcissable,
   - à rectifier ladite face (20), après durcissement de cette substance, de façon à sectionner lesdites portions de conducteurs (22, 23) qui font saillie sur cette face et à faire apparaître ainsi des pastilles de contact (24, 25) constituant les extrémités des enroulements (E1-1, E1-2, ..., E1-p) enrobés dans cette substance durcie, ces pastilles de contact étant destinées à permettre de raccorder ces enroulements à un circuit électrique de commande (11).

2. Procédé selon revendication 1, caractérisé en ce chaque noyau magnétique (tel que 17-1) est obtenu par sectionnement en n portions, d'un fil (17) de matériau magnétique doux, pourvu de n enroulements (E1, E2, ...., En) régulièrement répartis sur la longueur de ce fil.

3. Procédé selon l'une quelconque des revendications 1 et 2 caractérisé en ce que, le transducteur magnétique comportant k blocs-supports (19-1, 19-2, ...., 19-k), k étant un nombre entier au moins égal à deux, chacun de ces blocs-supports est obtenu par découpe d'une plaquette (19) de matériau amagnétique pourvue sur sa face (20) de p gorges (18-1, 18-2, ...., 18-p), cette découpe étant effectuée suivant une direction (XX') perpendiculaire auxdites gorges.

4. Procédé selon revendication 3, caractérisé en ce que la découpe de la plaquette (19) n'est effectuée que lorsque l'opération de rectification de ladite face (20) est terminée.

5. Procédé selon l'une quelconque des revendications 1 à 4 caractérisé en ce qu'il consiste en outre :
  - à fixer chaque bloc-support (tel que 19-1) contre un bord (33) d'une carte (27) équipée d'un circuit imprimé (29) et de composants (28) faisant partie du circuit électrique de commande (11), ce circuit imprimé étant conformé pour présenter des plages de contact (30, 31) le long dudit bord (33),
  - et à connecter ces plages de contact (30, 31) auxdites pastilles de contact (24, 25).

6. Procédé selon l'une quelconque des revendications 1 à 4, caractérisé en ce que, les pastilles de contact (24, 25) se répartissant en une première série de p pastilles (24) telles que chacune d'elles constitue l'une des deux extrémités de chaque enroulement, et en une seconde série de p pastilles (25) telle que chacune d'elles constitue l'autre extrémité de chaque enroulement, il consiste en outre :
  - à fixer chaque bloc-support (tel que 19-1) contre un bord (33) d'une carte équipée d'un circuit imprimé (29) et de composants (28) faisant partie du circuit électrique de commande (11), ledit circuit imprimé étant conformé pour présenter, le long dudit bord (33), une première série de p plages de contact (30) et une seconde série de p plages de contact (31),
  - à connecter chacune des pastilles de la première série (24) respectivement à chacune des plages de contact de la première série (30),
  - et à connecter chacune des pastilles de la seconde série (25) respectivement à chacune des plages de contact de la seconde série (31).

7. Procédé selon revendication 1, caractérisé en ce que, le transducteur magnétique comportant deux blocs-supports (59-1, 59-2), chacun des ces blocs-supports est obtenu par sciage d'une plaquette (59) de matériau isolant pourvue, sur l'une (20) de ses faces, de la série de p gorges (18-1, 18-2, ......, 18-p) ; ces gorges étant parallèles entre elles et disposées de telle manière que chacune d'elles admette pour axe de symétrie un axe médian (TT') de ladite plaquette (59); cet axe étant perpendiculaire à la direction des gorges, chaque gorge étant dimensionnée pour permettre d'y loger un fil (17) de matériau magnétique doux pourvu de deux enroulements (E1, E2), ce sciage étant effectué suivant ledit axe médian (TT').

8. Procédé selon revendication 7, caractérisé en ce que, les pastilles de contact (24, 25) se répartissant, dans chaque bloc-support, en une première série de p pastilles (24) telles que chacune d'elles constitue l'une des deux extrémités de chaque enroulement, et en une seconde série de p pastilles (25) telles que chacune d'elles constitue l'autre extrémité de chaque enroulement, et la plaquette (59) étant équipée de deux groupes de circuits imprimés (129-1, 129-2), situés de part et d'autre de l'axe médian (TT'), chaque groupe comportant des conducteurs formant p bandelettes conductrices (61-1 ou 61-2) s'étendant chacune en regard de chacune des p gorges (18-1, 18-2, ......, 18-p) et un conducteur, dit de retour (65-1 ou 65-2) destiné à assurer le retour du courant d'excitation des différents enroulements, il consiste en outre :
  - à connecter, dans chaque groupe, chacune des p bandelettes conductrices (par exemple 61-1) respectivement à chacune des p pastilles de la première série (24) qui se trouve du même côté que ce groupe par rapport à l'axe médian (TT'),
  - et à connecter, dans chaque groupe, le conducteur de retour (par exemple 65-1) de ce groupe à l'ensemble des p pastilles de la seconde série (25) qui se trouve du même côté que ce groupe par rapport à l'axe médian (TT').

9. Procédé selon l'une quelconque des revendications 5, 6 et 8, caractérisé en ce que les connexions effectuées pour raccorder les pastilles de contact au circuit électrique de commande sont réalisées au moyen de fils conducteurs (36).

10. Procédé selon l'une quelconque des revendications 5, 6 et 8, caractérisé en ce que les connexions effectuées pour raccorder les pastilles du contact au circuit électrique de commande sont réalisées au moyen de barrettes métalliques conductrices (63, 64).

11. Procédé selon revendication 10, caractérisé en ce que les barrettes métalliques sont formées par dépôt métallique, en faisant appel à la pulvérisation cathodique.

12. Transducteur magnétique pour l'enregistrement et/ou la lecture d'informations sur un support d'enregistrement (12), ce transducteur comportant au moins une rangée de p têtes magnétiques (T1, T2, T3, etc....), chacune de ces têtes étant constituée d'un noyau magnétique allongé pourvu d'un enroulement d'excitation, et au moins une plaquette-support (37-1), en matière amagnétique, comportant, sur l'une de ses faces (20) sur une zone s'étendant le long d'un de ses bords (55), une série de p gorges (18-1, 18-2, ......, 18-p), chacune de ces gorges renfermant un noyau magnétique (tel que 17-1) entouré par au moins un enroulement (tel que E1-1) de fil conducteur isolé, ledit transducteur étant caractérisé en ce qu'il comprend :
  -une substance amagnétique remplissant chaque gorge et enrobant le noyau et l'enroulement placés dans cette gorge, ledit enroulement étant pourvu de deux extrémités qui, affleurant ladite face (20), constituent deux pastilles de contact (24, 25),
  - un circuit imprimé (tel que 129-1) et des composants (28) faisant partie d'un circuit électrique de commande (11), ce circuit imprimé et ces composants étant disposés sur la face (20) de cette plaquette-support, mais en dehors de la zone desdites gorges, cette plaquette-support comprenant en outre des connexions (telles que 63-1, 64-11, 64-12, ......, 64-p) établies pour relier ledit circuit imprimé auxdites pastilles de contact (24, 25).

13. Transducteur magnétique pour l'enregistrement et/ou la lecture d'informations sur un support d'enregistrement (12), ce transducteur comportant au moins une rangée de p têtes magnétiques (T1, T2, T3, etc....), chacune de ces têtes étant constituée d'un noyau magnétique allongé pourvu d'un enroulement d'excitation,
et au moins un bloc-support (tel que 19-1), en matière amagnétique, comportant sur l'une de ses faces (20), une série de p gorges (18-1, 18-2, ...., 18-p), chacune de ces gorges renfermant un noyau magnétique (tel que 17-1) entouré par au moins un enroulement (tel que E1-1) de fil conducteur isolé, ledit transducteur étant caractérisé en ce qu'il comprend :
- une substance amagnétique remplissant chaque gorge, et enrobant le noyau et l'enroulement placés dans cette gorge, ledit enroulement étant pourvu de deux extrémités qui, affleurant ladite face (20) du bloc-support, constituent deux pastilles de contact (24, 25),
- au moins une carte (27) dont un bord (33) est fixé contre ledit bloc-support, cette carte étant équipée d'un circuit imprimé (29) et de composants (28) faisant partie d'un circuit électrique de commande (11), ce circuit imprimé étant conformé pour présenter des plages de contact (30, 31) le long dudit bord (33),
- et des connexions (36) établies pour relier électriquement lesdites plages de contact (30, 31) aux pastilles de contact (24, 25) dudit bloc-support.

## Claims

1. A method for producing a magnetic transducer adapted for recording and/or reading data on a magnetic substrate (12), this transducer including at least one row of p magnetic heads (T1, T2, T3 etc.), each of these heads comprising an elongated magnetic core provided with an exciting winding, this method comprising providing at least one support block (such as 19-1), of non-magnetic material, having a series of p grooves (18-1, 18-2, ..., 18-p) on one of its faces (20), and forming at least one winding (such as E1-1) of insulated conductor wire on each magnetic core (such as 17-1), this method being characterized in that with each winding having, in addition to its wound portion, two non-wound portions (22, 23), and each of the said grooves having dimensions sufficient to permit fully accommodating in it a magnetic core provided with its winding, it further consists of:
- placing each of the cores so provided (17-1, 17-2, ..., 17-p) into each of said grooves (18-1, 18-2, ..., 18-p), such that only the non-wound portions (22, 23) of said conductor wires project above said face (20);
- completely filling said grooves provided with these cores with the aid of a hardenable non-magnetic substance;
- precision grinding said face (20), after hardening of this substance, such as to sever said portions (22, 23) of said conductors projecting above said face and thus causing contact dots (24, 25) to appear, comprising the ends of the windings (E1-1, E1-2, ..., E1-p) embedded in this hardened substance, these contact dots being intended for permitting connection of these windings with an electrical control circuit (11).

2. A method according to Claim 1, characterized in that each magnetic core (such as 17-1) is obtained by severing a wire (17) of soft magnetic material, provided with n windings (E1, E2, ..., En) distributed at regular intervals over the length of this wire, into n portions.

3. A method according to any one of Claims 1 and 2, characterized in that, with the magnetic transducer including k support blocks (19-1, 19-2, ..., 19-k), k being an integer at least equal to two, each of these support blocks is obtained by cutting a wafer (19) of non-magnetic material provided on its face (20) with p grooves (18-1, 18-2, ..., 18-p), this cutting being performed in a direction (XX') perpendicular to said grooves.

4. A method according to Claim 3, characterized in that the cutting of the wafer (19) is performed only after the operation of precision grinding of said face (20) has been completed.

5. A method according to any one of Claims 1 to 4, characterized in that it furthermore comprises:
- fixing each support block (such as 19-1) against an edge (33) of a card (27) equipped with a printed circuit (29) and with components (28) that are part of the electrical control circuit (11), this printed circuit being configured such as to have contact zones (30, 31) along said edge (33);
- and connecting these contact zones (30, 31) to said contact dots (24, 25).

6. A method according to any one of Claims 1 to 4, characterized in that, with the contact dots (24, 25) distributed in a first series of p dots (24) such that each of them comprises one of the two ends of each winding, and in a second series of p dots (25) such that each of them comprises the other end of each winding, the method further comprises:
- fixing each support block (such as 19-1) against an edge (33) of a card equipped with a printed circuit (29) and with components (28) that are part of the electrical control circuit (11), said printed circuit being configured so as to have along said edge (33) a first series of p contact zones (30) and a second series of p contact zones (31);
- connecting each of the dots of the first series (24) respectively to each of the contact zones of the first series (30);
- and connecting each of the dots of the second series (25) respectively to each of the contact zones of the second series (31).

7. A method according to Claim 1, characterized in that, with the magnetic transducer including two support blocks (59-1, 59-2), each of these support blocks is obtained by slicing a wafer (59) of insulating material provided on one (20) of its faces with the series of p grooves (18-1, 18-2, 18-p), these grooves being parallel to one another and arranged such that each of them has as its axis of symmetry a median axis (TT') of said wafer (59), this axis being perpendicular to the direction of the grooves, each groove being dimensioned so as to permit the accommodation there of one wire (17) of soft magnetic material provided with two windings (E1, E2), this slicing being effected along said median axis (TT').

8. A method according to Claim 7, characterized in that, with the contact dots (24, 25) distributed in each support block in a first series of p dots (24) such that each of them comprises one of the two ends of each winding and in a second series of p dots (25) such that each of them comprises the other end of each winding, and with the wafer (59) equipped with two groups of printed circuits (129-1, 129-2) located on both sides of the median axis (TT'), each group including conductors forming p conductive strips (61-1 or 61-2), each extending facing each of the p grooves (18-1, 18-2, ..., 18-p) and one conductor, called the reverse conductor (65-1 or 65-2) and intended to assure the reversing of the excitation current of the various windings, the method further comprises:
- connecting in each group each of the p conductive strips (for example 61-1) respectively to each of the p dots of the first series (24) which is located on the same side as this group with respect to the median axis (TT'),
- and connecting in each group the return conductor (for example 65-1) in this group to all the p dots of the second series (25) that is located on the same side as this group with respect to the median axis (TT').

9. A method according to any one of Claims 5, 6 and 8, characterized in that the connections made so as to connect the contact dots to the electrical control circuit are embodied by means of conductor wires (36).

10. A method according to any one of Claims 5, 6 and 8, characterized in that the connections made so as to connect the contact dots to the electrical control circuit are embodied by means of metal conductor bars (63, 64).

11. A method according to Claim 10, characterized in that metal bars are formed by metal deposition, using the technique of cathodic sputtering.

12. A magnetic transducer for recording and/or reading data on a recording substrate (12), this transducer comprising at least one row of p magnetic heads (T1, T2, T3, etc...), each of these heads comprising an elongated magnetic core provided with an exciting winding, and at least one support wafer (37-1), of non-magnetic material, having, on one of its faces (20) over an area extending along one of its edges (55), a series of p grooves (18-1, 18-2, ...., 18-p), each of these grooves holding a magnetic core (such as 17-1) surrounded by at least one winding (such as E1-1) of insulated conductor wire, the said transducer being characterized in that it comprises:
- a non-magnetic substance filling each groove and surrounding the core and the winding placed in this groove, the said winding being provided with two ends which, being flush with said face (20), constitute two contact dots (24, 25),
- a printed circuit (such as 129-1) and components (28) forming part of an electrical control circuit (11), this printed circuit and these components being arranged on the face (20) of this support wafer, but outside the zone of the said grooves, this support wafer further comprising connections (such as 63-1, 64-11, 64-12, ... 64-p) formed to connect the said printed circuit to the said contact dots (24, 25).

13. A magnetic transducer for recording and/or reading data on a recording substrate (12), this transducer comprising at least one row of p magnetic heads (T1, T2, T3, etc...), each of these heads being constituted by an elongated magnetic core provided with an exciting winding, and at least one support block (such as 19-1), of non-magnetic material, comprising on one of its faces (20), a series of p grooves (18-1, 18-2, ..., 18-p), each of these grooves containing a magnetic core (such as 17-1) surrounded by at least one winding (such as E1-1) of insulated conductor wire, the said transducer being characterized in that it comprises:
- a non-magnetic substance filling each groove, and enclosing the core and the winding placed in this groove, the said winding being provided with two ends which, being flush with the said face (20) of the support block, constitute two contact dots (24, 25),
- at least one card (27) one edge (33) of which is fixed against the said support block, this card being equipped with a printed circuit (29) and components (28) forming part of an electrical control circuit (11), this printed circuit being configured so as to have contact zones (30, 31) along said edge (33),
- and connections (36) formed to connect electrically the said contact zones (30, 31) to the contact dots (24, 25) of the said support block.

**Patentansprüche**

1. Verfahren zum Herstellen eines magnetischen Wandlers, der für die Aufnahme und/oder das Auslesen von Informationen auf einem magnetischen Träger (12) geeignet ist, wobei dieser Wandler wenigstens eine Reihe von p magnetischen Köpfen (T1, T2, T3, usw.) aufweist und jeder dieser Köpfe aus einem langgestreckten magnetischen Kern besteht, der mit einer Erregerwicklung versehen ist, wobei dieses Verfahren darin besteht, wenigstens einen Trägerblock (wie 19-1) aus einem unmagnetischen Material zu bilden, der auf einer seiner Flächen (20) eine Reihe von p Nuten (18-1, 18-2, ... 18-p) aufweist, sowie darin besteht, wenigstens eine Wicklung (wie E1-1) eines isolierten Leiterdrahts auf jedem magnetischen Kern (wie 17-1) zu bilden, wobei dieses Verfahren dadurch gekennzeichnet ist, daß - wenn jede Wicklung zusätzlich zu ihrem gewickelten Teil noch zwei nicht gewickelte Teile (22, 23) aufweist und jede dieser Nuten ausreichende Abmessungen aufweist, um darin die vollständige Aufnahme eines magnetischen Kerns mit seiner Wicklung zu ermöglichen - es ferner darin besteht:
- jeden der so ausgestatteten Kerne (17-1, 17-2, ..., 17-p) in jeder dieser Nuten (18-1, 18-2, ..., 18-p) so anzubringen, daß nur die nicht gewickelten Teile (22, 23) der Leiterdrähte an der Fläche (20) herausragen;

- die mit diesen Kernen versehenen Nuten mittels einer härtbaren unmagnetischen Substanz auszufüllen;
- nach dem Aushärten dieser Substanz die Fläche (20) abzurichten, so daß die Teile der Leiter (22, 23), die an dieser Fläche herausragen, abgetrennt werden, und auf diese Weise Kontaktplättchen (24, 25) sichtbar zu machen, die die Enden der Wicklungen (E1-1, E1-2, ..., E1-p) bilden, welche in dieser gehärteten Substanz eingebettet sind, wobei diese Kontaktplättchen dazu bestimmt sind, den Anschluß dieser Wicklungen an eine elektrische Ansteuerschaltung (11) zu ermöglichen.

2. Verfahren nach Anspruch 1, dadurch gekennzeichnet, daß jeder magnetischer Kern (wie 17-1) durch eine Trennung in n Teile eines Drahtes (17) aus einem weichen magnetischen Material erhalten ist, der mit n Wicklungen (E1, E2, ..., En), welche auf der Länge dieses Drahtes gleichmäßig verteilt sind, versehen ist.

3. Verfahren nach einem der Ansprüche 1 und 2, dadurch gekennzeichnet, daß der magnetische Wandler k Trägerblöcke (19-1, 19-2, ..., 19-k) umfaßt, wobei k eine ganzzahlige Zahl ist, die wenigstens gleich zwei ist, und jeder dieser Trägerblöcke durch Stanzen eines Plättchen (19) aus einem unmagnetischen Material erhalten wird, das auf seiner Fläche (20) mit p Nuten (18-1, 18-2, ..., 18-p) versehen ist, wobei dieses Stanzen gemäß einer zu diesen Nuten senkrechten Richtung (XX') vorgenommen wird.

4. Verfahren nach Anspruch 3, dadurch gekennzeichnet, daß das Stanzen des Plättchen (19) erst dann erfolgt, wenn der Schritt zum Abrichten der Fläche (20) beendet ist.

5. Verfahren nach einem der Ansprüche 1 bis 4, dadurch gekennzeichnet, daß es ferner darin besteht:

- jeden Trägerblock (wie 19-1) auf einem Rand (33) einer Karte (27) zu befestigen, die mit einer gedruckten Schaltung (29) und mit Bestandteilen (28), die der elektrischen Ansteuerschaltung (11) angehören, versehen ist, wobei diese gedruckte Schaltung so ausgebildet ist, daß sie entlang des Randes (33) Kontaktbereiche (30, 31) aufweist,
- und diese Kontaktbereiche (30, 31) an diese Kontaktplättchen (24, 25) anzuschließen.

6. Verfahren nach einem der Ansprüche 1 bis 4, dadurch gekennzeichnet, daß die Kontaktplättchen (24, 25) in einer ersten Reihe von p Plättchen (24), so daß jedes von ihnen das eine der beiden Enden jeder Wicklung bildet, und in einer zweiten Reihe von p Plättchen (25) verteilt sind, so daß jedes von ihnen das andere Ende jeder Wicklung bildet, und daß es ferner darin besteht:

- jeden Trägerblock (wie 19-1) auf einen Rand (33) einer mit einer gedruckten Schaltung (29) sowie mit Bauteilen (28) versehenen Karte befestigt ist, die einer elektrischen Ansteuerschaltung (11) angehört, wobei die gedruckte Schaltung so ausgebildet ist, daß sie entlang des Randes (33) eine erste Reihe von p Kontaktbereichen (30) sowie eine zweite Reihe von p Kontaktbereichen aufweist,
- jedes der Plättchen der ersten Reihe (24) jeweils an jeden der Kontaktbereiche der ersten Reihe (30) anzuschließen,
- und jedes der Plättchen der zweiten Reihe (25) jeweils an jeden der Kontaktbereiche der zweiten Reihe (31) anzuschließen.

7. Verfahren nach Anspruch 1, dadurch gekennzeichnet, daß der magnetische Wandler zwei Trägerblöcke (59-1, 59-2) umfaßt und jeder dieser Trägerblöcke durch Absägen eines Plättchens (59) aus einem isolierenden Material, das auf einer (20) seiner Flächen mit der Reihe von p Nuten (18-1, 18-2, ..., 18-p) versehen ist, erhalten ist; diese Nuten sind zueinander parallel und so angeordnet, daß jede von ihnen als Symmetrieachse eine Mittelachse (TT') des genannten Plättchens (59) aufweist; wobei diese Achse zur Richtung der Nuten senkrecht ist und jede Nut solche Abmessungen aufweist, daß ein Draht (17) aus einem weichmagnetischen Material darin aufgenommen werden kann, der mit zwei Wicklungen (E1, E2) versehen ist, wobei das Absägen entlang dieser Mittelachse (TT') erfolgt.

8. Verfahren nach Anspruch 7, dadurch gekennzeichnet, daß in jedem Trägerblock die Kontaktplättchen (24, 25) in einer ersten Reihe von p Plättchen (24), so daß jedes von ihnen das erste der beiden Enden jeder Wicklung bildet, sowie in einer zweiten Reihe von p Plättchen (25), so daß jedes von ihnen das andere Ende jeder Wicklung bildet, verteilt sind, wobei das Plättchen (59) mit zwei Gruppen gedruckter Schaltungen (129-1, 129-2), die beiderseits der Mittelachse (TT') angeordnet sind, versehen ist, wobei jede Gruppe Leiter, die p Leiterbändchen (61-1 oder 61-2) bilden, wovon jedes sich gegenüber jeder der p Nuten (18-1, 18-2, ..., 18-p) erstreckt, sowie einen als Rückleiter bezeichneten Leiter (65-1 oder 65-2) umfaßt, der dazu bestimmt ist, den Rückfluß des Stromes zur Erregung der verschiedenen Wicklungen zu gewährleisten, und daß es ferner darin besteht:

- in jeder Gruppe jedes der p Leiterbändchen (z.B. 61-1) jeweils an jedes der p Plättchen der ersten Reihe (24) anzuschließen, die sich auf derselben Seite wie diese Gruppe in Bezug auf die Mittelachse (TT') befindet,
- und in jeder Gruppe den Rückleiter (z.B. 65-1) dieser Gruppe an die Gesamtheit der p Plättchen der zweiten Reihe (25), die sich auf derselben Seite wie diese Gruppe in Bezug auf die Mittelachse (TT') befindet, anzuschließen.

9. Verfahren nach einem der Ansprüche 5, 6 und 8, dadurch gekennzeichnet, daß die Anschlüsse, die für den Anschluß der Kontaktplättchen an die elektrische Ansteuerschaltung gebildet werden, über Leiterdrähte (36) erfolgen.

10. Verfahren nach einem der Ansprüche 5, 6 und 8, dadurch gekennzeichnet, daß die Anschlüsse, welche für den Anschluß der Kontaktplättchen an die elektrische Ansteuerschaltung hergestellt sind, mittels metallischer Leiterstege (63, 64) verwirklicht sind.

11. Verfahren nach Anspruch 10, dadurch gekennzeichnet, daß die metallischen Stege durch Metallüberzug unter Anwendung der kathodische Zerstäubung gebildet sind.

12. Magnetischer Wandler für die Aufnahme und/oder das Auslesen von Informationen auf einem Aufnahmeträger (12), wobei dieser Wandler wenigstens eine Reihe von p magnetischen Köpfen (T1, T2, T3, usw.) umfaßt, wobei jeder dieser Köpfe aus einem mit einer Erregerwicklung versehenen, langgestreckten magnetischen Kern besteht, und wenigstens ein Trägerplättchen (37-1) aus einem unmagnetischen Material auf einer seiner Flächen (20) auf einer sich entlang eines seiner Ränder (55) erstreckenden Zone eine Reihe von p Nuten (18-1, 18-2, ..., 18-p) umfaßt, wobei jede dieser Nuten einen magnetischen Kern (wie 17-1) enthält, der wenigstens von einer Wicklung (wie E1-1) eines isolierten Leiterdrahtes umgeben ist, wobei der Wandler dadurch gekennzeichnet ist, daß er umfaßt:

- eine unmagnetische Substanz, die jede Nut ausfüllt und in welcher der Kern sowie die Wicklung, die in dieser Nut angeordnet sind, eingebettet sind, wobei die Wicklung mit zwei Enden versehen ist, welche mit der Fläche (20) bündig sind und zwei Kontaktplättchen (24, 25) bilden,
- eine gedruckte Schaltung (wie 129-1) sowie Bauteile (28), die einer elektrischen Ansteuerschaltung (11) angehören, wobei diese gedruckte Schaltung und diese Bauteile auf der Fläche (20) des Trägerplättchens, aber außerhalb der Zone der Nuten angeordnet sind, wobei dieses Trägerplättchen ferner Anschlüsse (wie 63-1, 64-11, 64-12, ...., 64-p) umfaßt, die ausgebildet sind, um die gedruckte Schaltung mit den Kontaktplättchen (24, 25) zu verbinden.

13. Magnetischer Wandler für die Aufnahme und/oder das Auslesen von Informationen auf einem Aufnahmeträger (12), wobei dieser Wandler wenigstens eine Reihe von p magnetischen Köpfen (T1, T2, T3, usw.) umfaßt, wobei jeder dieser Köpfe aus einem mit einer Erregerwicklung versehenen, langgestreckten magnetischen Kern besteht, sowie wenigstens einen aus einem unmagnetischen Material bestehenden Trägerblock (wie 19-1) umfaßt, der auf einer seiner Flächen (20) eine Reihe von p Nuten (18-1, 18-2, ...., 18-p) aufweist, wobei jede dieser Nuten einen magnetischen Kern (wie 17-1) enthält, der von wenigstens einer Wicklung (wie E1-1) eines isolierten Leiterdrahts umgeben ist, wobei der Wandler dadurch gekennzeichnet ist, daß er umfaßt:

- eine jede Nut ausfüllende, unmagnetische Substanz, in welcher der Kern sowie die Wicklung, die in dieser Nut angeordnet sind, eingebettet sind, wobei diese Wicklung mit zwei Enden versehen ist, die mit der Fläche (20) des Trägerblocks bündig sind und zwei Kontaktplättchen (24, 25) bilden,
- wenigstens eine Karte (27), wovon ein Rand (33) auf dem Trägerblock befestigt ist, wobei diese Karte mit einer gedruckten Schaltung (29) sowie mit Bauteilen (28), die einer elektrischen Ansteuerschaltung (11) angehören, versehen ist, wobei diese gedruckte Schaltung so ausgebildet ist, daß sie Kontaktbereiche (30, 31) entlang des Randes (33) aufweist,

- und Anschlüsse (36) umfaßt, die hergestellt sind, um die Kontaktbereiche (30, 31) mit den Kontaktplättchen (24, 25) des Trägerblocks elektrisch zu verbinden.

EP 0 224 403 B1

FIG. 1A

FIG. 1B

FIG. 1C

EP 0 224 403 B1

FIG. 1D

FIG. 1E

FIG. 1F

FIG.1G

FIG.1H

FIG. 1I

EP 0 224 403 B1

# FIG.1J

10

50

# FIG.6

27-2  26-2  26-1  27-1

42                          41

X  J          J'
   K          K'

48  19-2  17-1  49

## FIG.2A

## FIG.2B

## FIG.2C

FIG. 2D

FIG. 2E

FIG. 2F

FIG. 2G

<u>FIG.2H</u>

<u>FIG.7</u>

<u>FIG.3</u>

## FIG. 4

## FIG.5